# EUROPÄISCHE PATENTSCHRIFT

(11) **EP 3 033 540 B1**
(45) Veröffentlichungstag und Bekanntmachung des Hinweises auf die Patenterteilung: **14.04.2021**
(21) Anmeldenummer: 14738528.0
(22) Anmeldetag: 11.07.2014
(51) Int. Cl.: F16D 65/12

(54) **BREMSSCHEIBE FÜR EIN FAHRZEUG**
BRAKE DISC FOR A VEHICLE
DISQUE DE FREIN POUR VÉHICULE

(30) Priorität: 13.08.2013 DE 102013215997
(43) Veröffentlichungstag der Anmeldung: 22.06.2016
(73) Patentinhaber: Bayerische Motoren Werke Aktiengesellschaft, 80809 München (DE)
(72) Erfinder: SCHULZ, Ulf, 13158 Berlin (DE); KOKOTT, Kordian, 85435 Erding (DE); WAGNER, Oliver, 80799 München (DE); BAMBL, Thomas, 84036 Landshut (DE); BERGMAIER, Stefan, 84364 Birnbach (DE); GRAF, Thomas, 80937 München (DE); STANGL, Matthias, 85221 Dachau (DE); WAGNER, Richard, 81245 München (DE)
(86) Internationale Anmeldenummer: PCT/EP2014/064989
(87) Internationale Veröffentlichungsnummer: WO 2015/022126

(56) Entgegenhaltungen:
- EP-A1- 0 872 659
- EP-A1- 1 260 728
- WO-A1-03/062661
- DE-A1- 1 775 685
- DE-A1- 10 032 972
- JP-A- 2005 180 482
- US-A1- 2007 193 837

## Beschreibung

Die Erfindung betrifft eine Verbund-Bremsscheibe für ein Kraftfahrzeug, nach dem Oberbegriff des ersten Anspruchs. Bremsscheiben sind mit einem Rad koaxial montierte Bestandteile eines Bremssystems für Kraftfahrzeuge, welche einen Reibring und einen Bremsscheibentopf aufweisen. Der Bremsscheibentopf dient dabei der Befestigung der Bremsscheibe an einer Radnabe, während der Reibring während des Bremsvorganges in tribologischen Kontakt mit den Bremsbelägen des Bremssystems gebracht wird. Hierdurch wird die kinetische Energie des Kraftfahrzeuges in Form von Reibungswärme abgebaut, das Fahrzeug wird abgebremst.

Solche Bremsscheiben können ein- oder mehrteilig gefertigt werden, wobei die größten Beanspruchungen an das Material des Reibringes gerichtet sind. Reibringe werden daher in der Regel als Gussbauteile, insbesondere in GG-15 oder GG-25, ausgeführt. Zur Abfuhr der beim Bremsvorgang entstehenden Wärme aus dem Reibring sind solche Reibringe häufig in Form innenbelüfteter Reibringe gestaltet, das heißt, sie sind mit Kanälen oder Bohrungen versehen, welche mit Luft durchströmt sind, um so die Wärmeabfuhr aus dem Reibring zu verbessern. Eine solche Bremsscheibe, bei welcher der oder die (üblicherweise zusammenhängenden) Reibringe getrennt vom Bremsscheibentopf gefertigt werden und danach mit diesem geeignet verbunden werden hat den Vorteil, dass der/die Reibring(e) einerseits und der Bremsscheibentopf andererseits aus den für die jeweiligen Anforderungen günstigsten Materialien gefertigt sein können. Hierdurch kann beispielsweise zum einen eine Gewichtsersparnis erzielt werden, und zum anderen ist damit eine vorteilhafte Entkoppelung zwischen dem Reibring und dem Bremsscheibentopf möglich.

Die EP 1 260 728 A1 beschreibt eine zweiteilige Bremsscheibe mit Schraubverbindung, bei der in einem Halteteil an dessen Befestigungsstellen radiale Mulden ausgebildet sind, die Raum für Schraubenköpfe bilden. Diese Mulden versteifen das Halteteil, das vom Reibring mittels einer geringen Verbindungsvorspannung entkoppelt wird. Dagegen beschreibt die DE 100 32 972 A1 eine solche Verbundbremsscheibe, bei der der im Wesentlichen wie üblich geformte Bremsscheibentopf einen bezüglich der Drehachse der Scheibenbremse kreiszylindrischen Mantel besitzt, in dem Durchbrüche oder zumindest Abschnitte mit reduzierter Wandstärke vorgesehen sind. Damit besitzt dieser Bremsscheibentopf eine gewisse Elastizität, die einer im Wesentlichen ungehinderten thermischen Reibringdehnung förderlich ist, d.h. die nicht vermeidbare thermische Reibringdehnung wird somit durch den Bremsscheibentopf nicht nennenswert behindert, so dass keine Spannungen aufgebaut werden und unerwünschte Reibringverformungen ausgeschlossen werden. In dieser Schrift ist als Material für den Bremsscheibentopf ein höherfestes Stahlmaterial oder ähnliches vorgeschlagen. Dabei erfordert diese bekannte Konstruktion relativ viel Bauraum in radialer Richtung, weshalb eine Anwendung nur bei größeren Bremsscheibendimensionen (Durchmessern) möglich ist

Dokument WO03/062661 A1 offenbart eine Scheibenbremse mit Verbindungsmittel zwischen dem Mantel des Bremsscheibentopfs und dem Reibring.

Diesen Nachteil zu vermeiden, ist Aufgabe der vorliegenden Erfindung, also eine Bremsschreibe insbesondere für kleinere Kraftfahrzeuge bereit zu stellen, bei welcher durch eine geeignete Verbindung von Reibring und Bremsscheibentopf der Platzbedarf für die Anbindung der Bremsscheibe an der Radnabe gering gehalten werden kann. Die Aufgabe wird erfindungsgemäß mit den Merkmalen des Anspruchs 1 gelöst. Weitere Ausgestaltungen der Erfindung ergeben sich aus den abhängigen Ansprüchen.

Nach der Erfindung ist eine Bremsscheibe für eine Scheibenbremse, die aus einem Bremsscheibentopf und wenigstens einem mit diesem über Niete verbundenen Reibring besteht, wobei der Mantel des Bremsscheibentopfs mit Abschnitten mit reduzierter Wandstärke und/oder Durchbrüchen versehen ist, wobei diese am Außenumfang des Bremsscheibentopfmantels befindliche und axial gerichtete Materialaussparungen sind, die der/zur zumindest teilweisen Platzierung der Niete dienen.

Erfindungsgemäß können damit die Niete möglichst nahe an den Mantel des Bremsscheibentopfes herangezogen werden, und hierbei in die axial gerichteten Aussparungen zumindest anteilig hineinragen, wobei sich Niete vorzugsweise (ebenfalls) in axialer Richtung, d.h. parallel zur Drehachse der Bremsscheibe erstrecken. Das hat den Vorteil, dass der bspw. aus einem Leichtmetall gefertigte Bremsscheibentopf in axialer Richtung mit einem beispielsweise in Grauguß ausgeführten Reibring aufgrund der Material-Ausparungen am Mantel des Bremsscheibentopfes so vernietet werden kann, dass der für die Niete in Radialrichtung benötigte Bauraum deutlich reduziert ist. Damit ist ein Verbindungsbereich zwischen Bremsscheibentopf und Reibring mit geringer bzw. minimierter Abmessung in Radialrichtung darstellbar, so der Durchmesser des Bremsscheibentopfes gering gehalten werden kann und als Folge hiervon eine kleinere Bremsscheibe darstellbar ist. Die axial ausgerichteten Aussparungen sind in ihrer Formgebung vorzugsweise an die Niete angepasst, wobei jede Aussparung den zugehörigen Niet nicht vollständig aufnehmen muss; vielmehr ist es ausreichend, wenn der jeweilige Niet nur teilweise in die zugehörige Aussparung hineinragt. Die Aussparungen dürfen nämlich auch nicht zu groß gestaltet sein, damit der Bremsscheibentopf bzw. dessen Mantels nicht zu intensiv geschwächt wird. In diesem Sinne kann die Aussparung beispielsweise für einen im wesentlichen kreiszylindrischen Niet beispielsweise in Form eines "Halbkreis-Zylinders" ausgebildet sein, dessen Zylinderachse im Bereich der unter Vernachlässigung dieser Aussparungen zylindrischen Außenseite des Bremsscheibentopf-Mantels liegt und sich ebenso wie die Längsachse des Niets parallel zur Drehachse der Bremsscheibe erstreckt. Der Vollständigkeit halber sei erwähnt, dass unter dem verwendeten Begriff "Platzierung", welcher die Aussparungen für die Niete dienen, nicht nur der Endzustand mit montierten Nieten zu verstehen ist, sondern auch der Montagevorgang der Niete, d.h. die besagten Aussparungen dienen dazu oder können zumindest dazu dienen, die Niete montieren zu können.

Bevorzugte Ausführungen der Erfindung sehen vor, dass der Bremsscheibentopf aus Leichtmetall oder aus Stahl oder aus einem Nichtmetallwerkstoff besteht, das heißt als Materialien für den Topf kommen vorzugsweise höherfeste hochfeste Leichtmetalle (u.a. Magnesium), oder ein hochfestes, dünnwandiges Stahlblech oder Aluminium und andere Nichteisen- bzw. Nichtmetallwerkstoffe in Frage. Der Bremsscheibentopf ist daher bspw. durch ein Gussverfahren oder ein Schmiedeverfahren oder durch Fließpressen herstellbar. Bei Verwendung eines erfindungsgemäßen in einem Leichtbaumaterial ausgeführten Bremsscheibentopfes ist neben Aluminiumrädern ein Einsatz von Stahlrädern möglich. Dabei ist es vorteilhaft, wenn ein radialer Stahlring im Kontaktbereich zwischen dem Bremsscheibentopf und dem an diesem anliegenden Rad vorgesehen ist oder wenn der Topf aus einem entsprechend widerstandsfähigen leichten Werkstoff hergestellt ist. Der genannte Stahlring kann dabei in eine Vertiefung des Bremsscheibentopfes eingesetzt oder eingegossen sein, um ein ansonsten möglicherweise erfolgendes Einarbeiten eines Stahlrades in das Material des Bremsscheibentopfes im Fahrbetrieb des Fahrzeugs zu vermeiden.

Der Reibring und der Bremsscheibentopf können vorteilhafterweise über die Niete und/oder über geeignet vorgesehene Zentrieransätze zueinander zentriert sein. Dabei kann der Reibring wenigstens einen von der Reibfläche nach innen gerichteten Befestigungsfortsatz aufweisen, mit dem ein Rand oder Kragen des Bremsscheibentopfmantels durch axial gerichtete Niete verbindbar ist.

Die Fügestelle zwischen Reibring und Bremsscheibentopf kann vorteilhafterweise als Press- oder Schrumpfsitz oder als stoffschlüssige oder formschlüssige Verbindung ausgebildet sein. Die Verbindung zwischen Bremsscheibentopf und Reibring wird über eine Nietverbindungen dargestellt, d.h. es kommen Niete zum Einsatz. Um dabei die Flächenpressung der Niete auch auf dem Graugussmaterial des Reibrings möglichst gering zu halten kann beispielsweise mit dem Taumel-Niet-Verfahren gefertigt werden. Um eine größtmögliche Spielfreiheit und somit quasi absoluten Formschluss zwischen dem Bremsscheibentopf und dem Reibring bzw. der Reibscheibe zu generieren, können gerändelte und/oder gestauchte und/oder gestufte Nieten (mit Presssitz) zum Einsatz kommen.

Um ein Ausbrechen der Nietverbindung aus dem Grauguss des Reibrings zu vermeiden, kann ein ringförmiges Stahlband vorgesehen sein, das zwischen den NietSchließköpfen und der Anbindungsfläche des Reibrings angebracht ist. Vorteilhafterweise kommt es durch diese Maßnahme zu einer flächigen Kraftverteilung bzw. Krafteinleitung über das Stahlband in den Reibring. Sind zwischen den einzelnen Nietschließköpfen Erhöhungen in die Oberfläche des Reibrings eingearbeitet, sodass das bspw. als Federstahlring ausgebildete Stahlband aufgrund dieser Erhöhungen bzw. Niveauunterschiede wellig verspannt wird, kann dadurch eine gewisse Vorspannung, ähnlich einer Schraubverbindung erzeugt werden. Alternativ kann das Stahlband bzw. der Federstahlring selbst entsprechend wellenförmig ausgebildet sein. Eine solche Vorspannung erhöht die Standfestigkeit der Niet-Verbindung, wobei eine vergleichbare Maßnahme auch mit anderen Verbindungsmitteln vorgesehen sein kann, und trägt zur Verteilung der im Betrieb entstehenden Spannungen bei. Alternativ ist auch eine Schraubverbindung (für das Verbindungsmittel) denkbar. Um ein Ausbrechen oder Risse im Grauguss des Reibrings aufgrund der Kräfte beim Nieten zu verhindern, können auch geeignete Unterlagscheiben (in Stahl bzw. Federstahl, bspw. in Form einer Tellerfeder) zwischen dem Nietschließkopf (oder dgl.) und dem Reibring vorgesehen sein, um die beim Nieten entstehenden Spannungen abzufangen. Selbstverständlich wäre entsprechendes auch am Kragen des Bremsscheibentopfes möglich.

Des Weiteren kann der Bremsscheibentopf über eine Zentrierung ("Zentrieransatz") in Form eines überstehenden Bundes verfügen, welcher das (Vor-)Fügen vereinfacht. Zusätzlich und zur Verbesserung der Anlagefläche und Tragfläche und zur Verringerung von (Spalt-)Korrosion kann der Bremsscheibentopf mit dem Reibring in diesem Zentrierungsbereich über Reibschweißen (vor)verbunden werden. Hierbei wird der Topf mit der Bremsscheibe fixiert und das (Vor)Fügen für den Herstell-Prozess, in welchem die Niete zwischen Reibring und Bremsscheibentopf fixiert werden, sowie für einen vorhergehenden insbesondere spanenden Herstellschritt, in welchem die besagten Material-Aussparungen zur zumindest teilweisen Platzierung der Niete beispielsweise durch Bohren hergestellt werden, wesentlich vereinfacht.

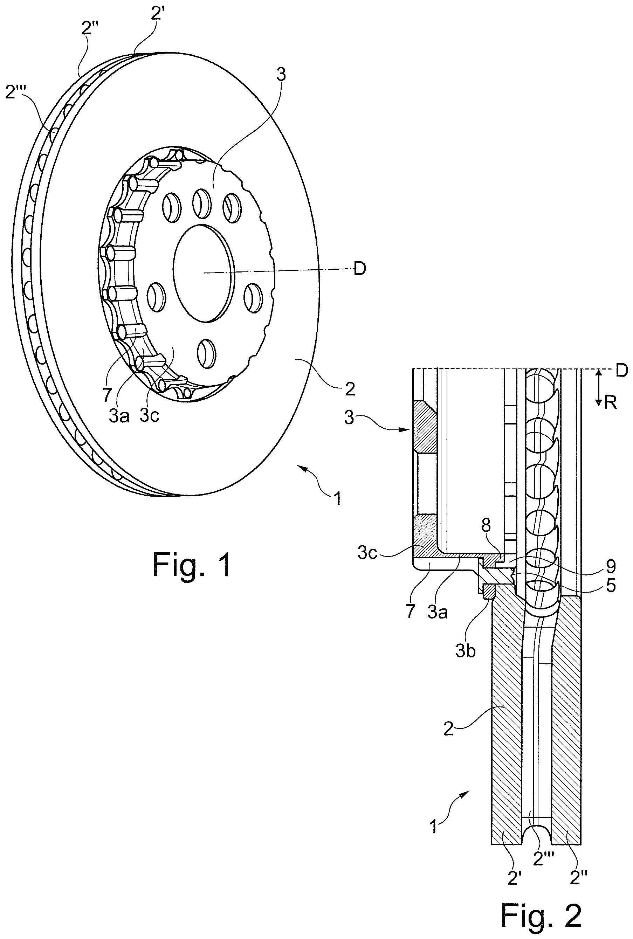

Im Folgenden wird die Erfindung anhand eines Ausführungsbeispiels weiter erläutert. Erfindungswesentlich können sämtliche näher beschriebenen Merkmale sein und es zeigt
- Fig.1: eine erfindungsgemäße Bremsscheibe in räumlicher Darstellung mit Blick auf den Bremsscheibentopf,
- Fig.2: die Bremsscheibe nach Figur 1 im Schnitt (die Schnittebene enthält die Drehachse), gegenüber Figur 1 um eine in der Zeicheneben liegende Vertikalachse gedreht, mit einem unter den Nietschließköpfen liegenden Stahlband,
- Fig.3: einen vergrößerten Teilschnitt gemäß Fig.2 einer Bremsscheibe ohne das Stahlband aus Fig.2
- Fig.4: die Aufsicht auf die Topf-Seite der Bremsscheibe, sowie
- Fig.5: eine Explosionsdarstellung der Bremsscheibe mit Stahlband (gemäß Fig.2)

Die in den Figuren dargestellte Bremsscheibe 1 besteht aus einem Bremsscheibentopf 3 und einem Reibring 2 und ist (wie üblich) für die Montage an einer nicht gezeigten Radnabe vorgesehen, um mit dieser im Betrieb um die Drehachse D zu rotieren. Der einstückige innengekühlte und in Grauguss gefertigte Reibring 2 besteht aus zwei Reibscheiben 2', 2" mit dazwischen liegenden und diese miteinander verbindenden Kühlluftführungen 2'''. Die in Axialrichtung, d.h. in Richtung der Drehachse D betrachtet näher am Bremsscheibentopf 3 liegende ringförmige Reibscheibe 2' erstreckt sich in Radialrichtung R (bezüglich der Drehachse D) betrachtet mit einem sog. Befestigungsfortsatz 9 um ein gewisses (geringes) Maß weiter zur Drehachse D hin als die andere in Axialrichtung weiter vom Bremsscheibentopf 3 entfernte Reibscheibe 2".

Im Überlappungsbereich zwischen dem genannten Befestigungsfortsatz 9 der Reibscheibe 2' und einem vom freien Ende des bezüglich der Drehachse D kreiszylindrischen Mantels 3a des Bremsscheibentopfes 3 in Radialrichtung R abstehenden Kragen 3b ist der Bremsscheibentopf 3 über sich in Axialrichtung erstreckende Verbindungselemente 5 in Form von Nieten (für diese wird ebenfalls die Bezugsziffer 5 verwendet) mit der Reibscheibe 2' und somit mit dem Reibring 2 verbunden. In diesem Sinne wird vorliegend (und insbesondere in der Beschreibungseinleitung) von einer Verbindung zwischen dem Bremsscheibentopf 3 und dem Reibring 2 gesprochen.

In den Mantel 3a des Bremsscheibentopfes 3 sowie in geringem Umfang auch in den Boden 3c des Bremsscheibentopfes 3 sind gleichmäßig über dem Umfang des Bremsscheibentopfes 3 verteilt Aussparungen 7 eingebracht, in welche die Niete 5 hineinragen, d.h. in denen die Niete 5 zumindest anteilig platziert sind. Jede dieser Aussparungen 7, welche auch als Abschnitte 7 mit reduzierter Wandstärke bezeichnet werden und auch in Form eines Durchbruchs gestaltet sein kann, erstreckt sich in Axialrichtung, um den jeweils zugehörigen ebenso orientierten Niet 5 zumindest teilweise nicht nur aufnehmen, sondern auch setzen, d.h. wie ersichtlich in Axialrichtung montieren zu können. Dabei besitzen diese Aussparungen 7 vorliegend die Form eines Halbkreis-Zylinders und sind bspw. durch spanende Bearbeitung solchermaßen in den Mantel 3a des Bremsscheibentopfes 3 eingebracht, dass dieser Mantel 3a im Bereich dieser Aussparungen 7 zwar geschwächt ist, jedoch innen, d.h. von der Drehachse D aus betrachtet noch eine geschlossene Wand bildet. Alternativ können die Aussparungen 7 jedoch auch näher zur Drehachse D hin platziert sein, so dass der Mantel 3a über diese Aussparungen 7 in Radialrichtung R betrachtet tatsächlich Durchbrüche aufweist. Selbstverständlich sind auch im Kragen 3b des Mantels 3a Durchbrüche in Form von Bohrungen quasi als Fortsetzung zu den Aussparungen 7 vorgesehen, durch welche die Niete 5 hindurch gesteckt sind. Wesentlich ist, dass die Aussparungen 7 am Außenumfang des Bremsscheibentopf-Mantels 3a vorgesehen sind, so dass die Niete 5 zwar einerseits von außen her in Radialrichtung R betrachtet sichtbar sind, aber andererseits erfindungsgemäß aufgrund dieser Aussparungen 7 näher zur Drehachse D hin angeordnet (platziert) sein können, als wenn diese Aussparungen 7 nicht vorhanden wären. Dies ermöglicht - wie eingangs bereits erläutert - die Darstellung einer Bremsscheibe 3 mit relativ geringem Durchmesser, indem die besagten Aussparungen 7 die Niete 5 nicht nur teilweise aufnehmen, sondern auch deren Montage ermöglichen.

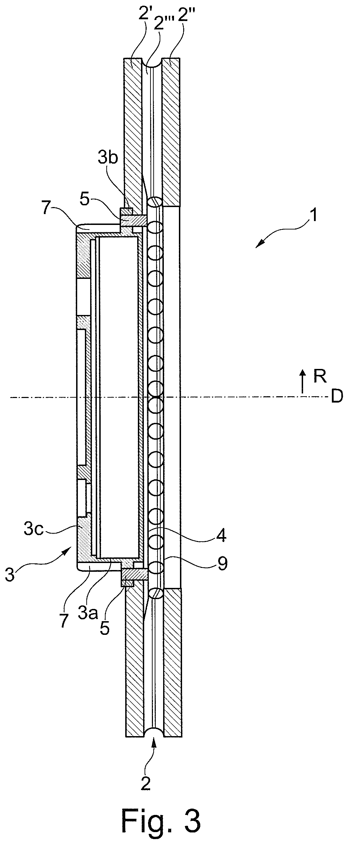

Bereits erwähnt wurde, dass die Aussparungen 7 zumindest annähernd bzw. im wesentlichen in Form eines Halbkreis-Zylinders gestaltet sind, wobei die die Längsachse eines Vollzylinders, aus dem der jeweilige Halbkreis-Zylinder gebildet ist, enthaltende Mittenebene des genannten Vollzylinders praktisch eine Tangential-Ebene an die Oberfläche des Mantels 3a des Bremsscheibentopfes 3 ist. Wie insbesondere aus Fig.3 hervorgeht kann der Mantel 3a in Radialrichtung R von außen zur Drehachse D hin betrachtet zwischen zwei benachbarten Aussparungen 7 konkav geformt sein, so dass der Mantel 3a über dem Umfang integriert betrachtet unter Berücksichtigung der besagten Aussparungen 7 annähernd eine gleichmäßige Wandstärke aufweist.

Der ansonsten im Wesentlichen zylindrische Bremsscheibentopf-Mantel 3a ist über seinen bereits genannten und von seinem dem Boden 3c des Topfes 3 abgewandten Ende abragenden Kragen 3b mittels Nieten 5 unter Anwendung eines Taumel-Niet-Verfahrens mit dem Reibring 2 verbunden, wobei - wie bereits erläutert - diese Nieten 5 aufgrund der Aussparungen 7 im Mantel 3a möglichst nahe am Bremsscheibentopf-Mantel 3a, genauer sogar zumindest teilweise im Bremsscheibentopf-Mantel 3a platziert sind. Ein Zentrieransatz 8 am Kragen 3b des Bremsscheibentopfs 3 zentriert den Bremsscheibentopf 3 bezüglich des Reibrings 2 bzw. der Reibscheibe 2' (bzw. umgekehrt), und genauer bezüglich deren Befestigungsfortsatz. Es können die beiden separat gefertigten Bauteile Bremsscheibentopf 3 und Reibring 2 aber auch über die Niete 5 selbst zueinander zentriert sein oder über eine Fügestelle zwischen dem Reibring 2 und dem Bremsscheibentopf 3, die als Press- oder Schrumpfsitz oder als stoffschlüssige Verbindung ausgebildet ist.

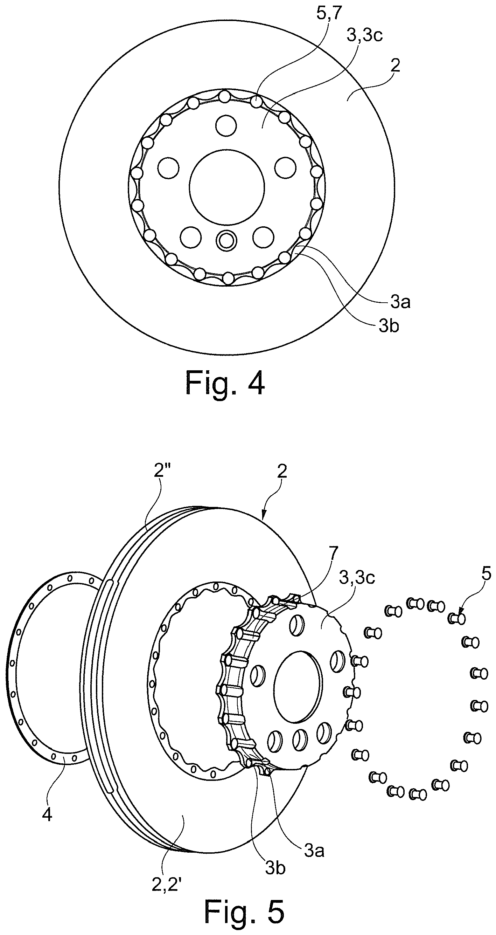

Sowohl in Fig.3 als auch in Fig.5 erkennt man ein ringförmiges Stahlband 4, welches an der Innenseite der Reibscheibe 2' unterhalb der Schließköpfe aller Niete 5 anliegt. Dieses Stahlband 4 bzw. ein entsprechender Federstahlring wurden vor der Figurenbeschreibung ausführlicher erläutert.

## Patentansprüche

1. Bremsscheibe (1) für eine Scheibenbremse, die aus einem Bremsscheibentopf (3) und wenigstens einem mit diesem über Niete (5) verbundenen Reibring (2) besteht, wobei der Mantel (3a) des Bremsscheibentopfs (3) mit Abschnitten (7) mit reduzierter Wandstärke und/oder Durchbrüchen versehen ist, **dadurch gekennzeichnet, dass** diese am Aussenumfang des Bremsscheibentopf-Mantels (3a) befindliche und axial gerichtete Material-Aussparungen (7) sind, die der/zur zumindest teilweisen Platzierung der Niete (5) dienen.

2. Bremsscheibe (1) nach Anspruch 1, **dadurch gekennzeichnet, dass** der Bremsscheibentopf (3) aus Leichtmetall oder aus Stahl oder aus einem Nichtmetallwerkstoff besteht.

3. Bremsscheibe (1) nach Anspruch 1 oder 2, **dadurch gekennzeichnet, dass** Reibring (2) und Bremsscheibentopf (3) über die Niete (5) und/oder über zumindest einen Zentrieransatz (8) zueinander zentriert sind.

4. Bremsscheibe (1) nach einem der Ansprüche 1 bis 3, **dadurch gekennzeichnet, dass** der Reibring (2) wenigstens einen von der Reibfläche nach innen gerichteten Befestigungsfortsatz (9) aufweist, mit dem ein Kragen (3b) des Bremsscheibentopf-Mantels (3a) durch axial gerichtete Niete (5) verbunden ist.

5. Bremsscheibe (1) nach einem der Ansprüche 1 bis 4, **dadurch gekennzeichnet, dass** eine Fügestelle zwischen Reibring (2) und Bremsscheibentopf (3) als Press- oder Schrumpfsitz oder als stoffschlüssige oder formschlüssige Verbindung ausgebildet ist.

6. Bremsscheibe (1) nach einem der Ansprüche 1 bis 5, **dadurch gekennzeichnet, dass** ein Stahlring im Bereich von Kontaktstellen von Radfelge zu Bremsscheibentopf (3) in eine Vertiefung des Bremsscheibentopfes (3) eingesetzt oder eingegossen ist.

7. Bremsscheibe (1) nach einem der Ansprüche 1 bis 6, **dadurch gekennzeichnet, dass** Bremsscheibentopf (3) und der Reibring (2) mittels eines Taumel-Niet-Verfahrens verbunden sind.

8. Bremsscheibe nach Anspruch 7, **dadurch gekennzeichnet, dass** gerändelte und/oder gestauchte und/oder gestufte Nieten (5) zur Erzeugung eines ein spielfreier Formschlusses vorgesehen sind.

9. Bremsscheibe (1) nach einem der Ansprüche 1 bis 6, **dadurch gekennzeichnet, dass** sich zwischen Nietschließköpfen und der Anbindungsfläche des Reibrings (2) ein ringförmiges Stahlband befindet.

10. Bremsscheibe (1) nach einem der vorangegangenen Ansprüche, **dadurch gekennzeichnet, dass** der Reibring (2) zwischen den Nietschließköpfen in axialer Richtung Erhöhungen besitzt, damit das Stahlband aufgrund der Niveauunterschiede wellig verspannt wird /alternativ wellenförmiger Stahlring .

11. Bremsscheibe (1) nach einem der vorangegangenen Ansprüche, **dadurch gekennzeichnet, dass** an den Nieten Unterlegscheiben aus Federstahl vorgesehen sind.

## Claims

1. Brake disc (1) for a disc brake, which brake disc (1) consists of a brake disc hat (3) and at least one friction ring (2) which is connected to the said brake disc hat (3) via rivets (5), the shell (3a) of the brake disc hat (3) being provided with sections (7) with a reduced wall thickness and/or apertures, **characterized in that** the latter are material cut-outs (7) which are situated on the outer circumference of the brake disc hat shell (3a), are oriented axially, and serve for the at least partial positioning of the rivets (5).

2. Brake disc (1) according to Claim 1, **characterized in that** the brake disc hat (3) consists of light metal or of steel or of a non-metallic material.

3. Brake disc (1) according to Claim 1 or 2, **characterized in that** the friction ring (2) and the brake disc hat (3) are centred with respect to one another via the rivets (5) and/or via at least one centring lug (8).

4. Brake disc (1) according to one of Claims 1 to 3, **characterized in that** the friction ring (2) has at least one fastening projection (9) which is directed inwards from the friction face and to which a collar (3b) of the brake disc hat shell (3a) is connected by way of axially directed rivets (5).

5. Brake disc (1) according to one of Claims 1 to 4, **characterized in that** a joint between the friction ring (2) and the brake disc hat (3) is configured as a press or shrink fit or as an integrally joined or positively locking connection.

6. Brake disc (1) according to one of Claims 1 to 5, **characterized in that** a steel ring is inserted or cast into a depression of the brake disc hat (3) in the region of contact points of the wheel rim with the brake disc hat (3).

7. Brake disc (1) according to one of Claims 1 to 6, **characterized in that** the brake disc hat (3) and the friction ring (2) are connected by means of a wobble riveting method.

8. Brake disc according to Claim 7, **characterized in that** knurled and/or upset and/or stepped rivets (5) are provided for the production of a play-free positively locking connection.

9. Brake disc (1) according to one of Claims 1 to 6, **characterized in that** an annular steel band is situated between rivet closing heads and the attachment face of the friction ring (2).

10. Brake disc (1) according to one of the preceding claims, **characterized in that** the friction ring (2) has elevations in the axial direction between the rivet closing heads, in order that the steel band is braced in an undulating manner on account of the level differences; as an alternative, an undulating steel ring.

11. Brake disc (1) according to one of the preceding claims, **characterized in that** shims made from spring steel are provided on the rivets.

## Revendications

1. Disque de frein (1) pour un frein à disque, qui est constitué d'une nacelle de disque de frein (3) et d'au moins un anneau de friction (2) relié à celle-ci par le biais de rivets (5), l'enveloppe (3a) de la nacelle de disque de frein (3) étant dotée de parties (7) d'épaisseur de paroi réduite et/ou d'ouvertures, **caractérisé en ce que** celles-ci sont des évidements de matière (7) situés sur la périphérie extérieure de l'enveloppe de nacelle de disque de frein (3a) et orientés axialement, lesquels évidements servent au placement ou au placement au moins partiel des rivets (5) .

2. Disque de frein (1) selon la revendication 1, **caractérisé en ce que** la nacelle de disque de frein (3) est constituée de métal léger ou d'acier ou d'une matière non métallique.

3. Disque de frein (1) selon la revendication 1 ou 2, **caractérisé en ce que** l'anneau de friction (2) et la nacelle de disque de frein (3) sont centrés l'un par rapport à l'autre par le biais des rivets (5) et/ou par le biais d'au moins une saillie de centrage (8).

4. Disque de frein (1) selon l'une des revendications 1 à 3, **caractérisé en ce que** l'anneau de friction (2) comprend au moins un prolongement de fixation (9) orienté vers l'intérieur à partir de la surface de friction, prolongement auquel une collerette (3b) de l'enveloppe de nacelle de disque de frein (3a) est reliée par des rivets (5) orientés axialement.

5. Disque de frein (1) selon l'une des revendications 1 à 4, **caractérisé en ce qu'**une jointure entre l'anneau de friction (2) et la nacelle de disque de frein (3) est réalisée comme ajustement forcé ou fretté ou comme liaison de matière ou par complémentarité de forme.

6. Disque de frein (1) selon l'une des revendications 1 à 5, **caractérisé en ce qu'**un anneau en acier est inséré ou coulé dans un renfoncement de la nacelle de disque de frein (3) dans la région de points de contact de la jante de roue avec la nacelle de disque de frein (3).

7. Disque de frein (1) selon l'une des revendications 1 à 6, **caractérisé en ce que** la nacelle de disque de frein (3) et l'anneau de friction (2) sont reliés par le biais d'un procédé de rivetage orbital.

8. Disque de frein selon la revendication 7, **caractérisé en ce que** des rivets (5) moletés et/ou refoulés et/ou étagés sont prévus pour la réalisation d'une liaison par complémentarité de forme sans jeu.

9. Disque de frein (1) selon l'une des revendications 1 à 6, **caractérisé en ce qu'**une bande d'acier annulaire se trouve entre les têtes de fermeture de rivet et la surface de connexion de l'anneau de friction (2).

10. Disque de frein (1) selon l'une des revendications précédentes, **caractérisé en ce que** l'anneau de friction (2) présente des rehaussements dans la direction axiale entre les têtes de fermeture de rivet, afin que la bande d'acier soit serrée de manière ondulée en raison des différences de niveaux, en variante un anneau en acier ondulé.

11. Disque de frein (1) selon l'une des revendications précédentes, **caractérisé en ce que** des rondelles en acier à ressorts sont prévues au niveau des rivets.
